# EUROPEAN PATENT APPLICATION

(11) **EP 3 637 203 A1**
(43) Date of publication of application: **15.04.2020**
(21) Application number: 18199526.7
(22) Date of filing: 10.10.2018
(51) Int. Cl.: G05B 15/02

(54) **BUILDING AUTOMATION SYSTEM AND METHOD OF ITS OPERATION**

(71) Applicant: Vestel Elektronik Sanayi ve Ticaret A.S., 45030 Manisa (TR)
(72) Inventor: DÖNER, Cagdas, 45030 Manisa (TR)
(74) Representative: Kehl, Ascherl, Liebhoff & Ettmayr Patentanwälte Partnerschaft mbB

(57) **Abstract**

The present invention provides a building automation system (1) at least comprising a sensor (10) operable to detect a plurality of different sleep stages of a human or animal subject, at least one building automation device (12a, 12b, 12c, ... 12z) and a control unit (14). The sensor (10) may, for example, be a wearable sensor, such as a fitness wristband. The sensor (10) may comprise a heart-rate monitor for measuring the heart rate of the subject as a convenient indicator of the different sleep stages of the subject. The at least one building automation device (12a, 12b, 12c, ... 12z) has a plurality of different activation states in addition to an off state. The control unit (14) is operable to distinguish between the plurality of different sleep stages detected by the sensor (10) and to place the at least one building automation device (12a, 12b, 12c, ... 12z) into one of the plurality of different activation states thereof in dependence on which one of the plurality of different sleep stages of the subject is detected by the sensor (10). The building automation system (1) may also comprise a user interface (16) with the control unit(14), whereby a user may adjust the dependency of the different activation states of the at least one building automation device (12a, 12b, 12c, ... 12z) on the different sleep stages of the subject. The present invention also provides a method of operating such a building automation system and a computer program product or a program code or system for executing such a method.

## Description

The present invention relates to a building automation system according to claim 1, a method of operating a building automation system according to claim 7 and a computer program product or a program code or system according to claim 15.

### Background of the Invention

Building automation systems, such as home automation systems, typically comprise one or more building automation devices distributed around a building for controlling such things as the lighting or climate within the building, entertainment systems and/or domestic appliances. Such building automation devices often also include building security devices, such as for access control, and alarm systems. A building automation system typically also comprises a central hub or "gateway" connected to the building automation devices, which a user may access via a user interface, in order to control the system. The user interface may, for example, be provided by a wall-mounted terminal, a tablet, laptop or desktop computer, a mobile phone application, or a Web interface, which may also be remotely accessible via the Internet.

For greater convenience in their installation, the one or more building automation devices are usually connected to the central hub or gateway using a wireless technology, such as wi-fi, Bluetooth™ or Z-wave™. For the same reason, as well as being set up for wireless communication, the building automation devices are typically also powered by a battery or supercapacitor, rather than being powered via a wired connection to a source of mains electricity. In general, the building automation devices also always remain on, so that their notification and monitoring systems are always actively running and can therefore be accessed by a user at any time via the user interface. However, this has the disadvantage that the building automation devices can rapidly drain their respective supplies of electrical power, which requires more frequent replacement or recharging of their batteries or supercapacitors.

It is known to switch building automation devices of a building automation system on and off according to a sleep state of a user.

For example, CN 106880219 A describes a smart bed, which monitors when a user has entered a deep sleep state and which switches on a burglar alarm system of a building if so.

CN 106880219 A also proposes to switch off lighting, home entertainment systems and/or domestic appliances within the building if the smart bed detects that the user has entered a deep sleep state. It is also known to switch building automation devices of a building automation system on and off according to a physiological state of a user.

CN 105182765 A describes a building automation system in which building automation devices are controlled to operate according to the physiological status of a user. In an embodiment of the system described therein, some of a plurality of building automation devices can be controlled to be switched off whilst others of the plurality of building automation devices are controlled to be switched on, and vice versa.

### Object of the Invention

It is therefore an object of the invention to provide an improved building automation system, an improved method of operating a building automation system, and a computer program product or a program code or system for executing such a method.

### Description of the Invention

The object of the invention is solved by a building automation system according to claim 1. The building automation system at least comprises a sensor operable to detect a plurality of different sleep stages of a human or animal subject, at least one building automation device having a plurality of different activation states in addition to an off state, and a control unit. The control unit is operable to distinguish between the plurality of different sleep stages detected by the sensor and to place the at least one building automation device into one of the plurality of different activation states thereof in dependence on which one of the plurality of different sleep stages of the subject is detected by the sensor.

This solution is beneficial because the at least one building automation device may, for example, be deactivated when its operation is not required during certain stages of sleep or have reduced activity during other stages of sleep, thereby reducing the electrical power consumption of the at least one building automation device, for example extending its battery life, if the at least one building automation device is not connected to a source of mains electricity. In addition, this solution also provides the advantage that the level of activation of the at least one building automation device may also be aligned with the sleep stage of the subject for optimum operation of the system, for example by helping to eliminate false alarms caused by movement of the subject during light sleep.

The building may, for example, be a home or it may be another type of building where the human or animal subject sleeps, such as a hotel, dormitory, barracks, or in the case of an animal subject, a kennel, stables or the like.

The at least one building automation device may comprise an environmental monitoring device for monitoring at least one aspect of an environment of the building, such as a burglar alarm, smoke detector, gas leakage sensor, flood detector, an exterior or interior camera, motion sensor, climate sensor, such as a temperature, pressure or humidity sensor, or the like. Alternatively or additionally, the at least one building automation device may comprise an environmental control device for controlling at least one aspect of an environment of the building, such as a lighting control device, a heating, ventilation or air-conditioning control device, and/or an entertainment system control device. Furthermore, the at least one building automation device may alternatively or additionally comprise a control device for one or more of a gate or window lock, an exterior door lock and an interior door lock.

Purely by way of example, in case the at least one building automation device is a camera, the different activation states of the camera in addition to its off state may comprise different levels of image quality and/or spatial or temporal resolution, generating respectively different amounts of image data.

Advantageous embodiments of the invention may be configured according to any claim and/or part of the following description.

In some embodiments of the invention, the sensor may comprise a wearable sensor, such as a fitness wristband, smart watch, dog collar or the like. This solution is beneficial because operation of the system is then not limited to the location of the subject within the building, which would otherwise be the case if the different sleep stages of the user were instead detected, for example, by a fixed sensor, such as a smart bed.

In another embodiment, the sensor may comprise a heart-rate monitor. This solution is beneficial because the heart rate of the human or animal subject can be used by the control unit as a good proxy for distinguishing between the plurality of different sleep stages of the subject detected by the sensor. Alternatively or additionally, the sensor may at least comprise a motion sensor for detecting motion of the subject.

In some embodiments, the at least one building automation device may be scheduled to communicate with the control unit at a time or times determined by the sleep stage of the subject. For example, the at least one building automation device may be scheduled to communicate with the control unit only when the subject is awake in the case of some types of device which request feedback from a user, or only when the subject is in deep sleep for other types of device, such as for alarms. This solution is beneficial because wireless communication between building automation devices and the control unit is a significant drain on their respective sources of electrical power. The battery life of a wireless building automation device may thereby be extended by reducing the overall amount of communication which takes place between the at least one building automation device and the control unit.

In further embodiments, the plurality of different activation states of the at least one building automation device may comprise a plurality of different security levels of the device, such as a single lock and a double lock, or different levels of sensitivity to environmental factors, such as to gas, smoke, temperature, pressure or humidity levels. This solution is beneficial because it allows the security level of the device to be set at a level which is appropriate to the detected sleep stage of the subject. For example, some types of alarm may be turned off when the subject is awake, but given a greatest level of sensitivity when the subject is in deep sleep and a lesser level of sensitivity when the subject is in light sleep.

In some embodiments, the building automation system may further comprise a user interface in communication with the control unit, the user interface being operable by a user to adjust the dependency of the plurality of different activation states of the at least one building automation device on the plurality of different sleep stages of the subject. The user may be the same person as the subject or different from the subject, for example in the case where the subject is a non-human animal. The user interface may, for example, be provided by a wall-mounted terminal, a tablet, laptop or desktop computer, a mobile phone application, or a Web interface, which may also be remotely accessible via the Internet.

Whereas it is already known for building automation systems to comprise a user interface, the embodiments of the present invention just described are distinguished from them by the fact that the user may adjust the dependency of the plurality of different activation states of the at least one building automation device on the plurality of different sleep stages of the subject. This solution is beneficial because it allows the user to set and/or alter the relationship between the plurality of different activation states of the at least one building automation device and the plurality of different sleep stages of the subject, even though the control unit then controls the operation of the at least one building automation device once such a relationship has been set. Alternatively or additionally, the control unit may be subject to a process of machine learning, whereby the control unit may itself adapt the plurality of different activation states of the at least one building automation device to the plurality of different sleep stages of the subject.

The present invention also relates to a method of operating a building automation system. The method at least comprises detecting by means of a sensor one of a plurality of different sleep stages of a human or animal subject present within the building, distinguishing by means of a control unit the detected one of the plurality of different sleep stages of the subject from other ones of the plurality of different sleep stages of the subject, activating by means of the control unit at least one building automation device within or on the building, wherein the at least one building automation device has a plurality of different activation states in addition to an off state, and placing by means of the control unit the at least one building automation device into one of the plurality of different activation states thereof in dependence on the detected sleep stage of the subject.

This solution is beneficial because it allows the control unit to change the level of activation of the at least one building automation device when the subject is asleep, and even though the subject is asleep, and is therefore unable to intervene as a user in the control of the building automation system whilst they are asleep. The electrical power consumption of the at least one building automation device may thereby be reduced by aligning its level of activation with the sleep stage of the subject, thus extending its battery life if the at least one building automation device is not connected to a source of mains electricity. This solution also provides the advantage that the level of activation of the at least one building automation device may be optimised to the sleep stage of the subject, thereby helping, for example, to eliminate false alarms caused by movement of the subject during light sleep.

In some embodiments, detecting one of a plurality of different sleep stages of the subject may comprise detecting a heart rate of the subject. This has the advantage that the heart rate of the subject may be used as a convenient proxy for detecting the sleep stage of the subject without having to monitor the subject's brain waves.

If so, in some embodiments, distinguishing the detected one of the plurality of different sleep stages of the subject from other ones of the plurality of different sleep stages of the subject may comprise determining whether the heart rate of the subject lies within a predetermined range. The predetermined range may be established according to a personal heart-rate profile of the subject, which may be acquired by the control unit, for example, by a process of machine learning.

In further embodiments, communication between the at least one building automation device and the control unit may be scheduled for a time or times determined by the sleep stage of the subject. This has the advantage of allowing the electrical power consumption of the at least one building automation device to be reduced, by avoiding communication between the at least one building automation device and the control unit at times when such communication is unnecessary.

In some embodiments, placing the at least one building automation device into one of the plurality of different activation states thereof may comprise placing the device into one of a plurality of different security levels of the device. The different security levels may comprise different levels of sensitivity of the device to environmental factors, such as heat, smoke, gas, flood, etc., and/or different frequencies of sampling by the device of such environmental factors. This solution is beneficial because such a reduced sampling frequency also helps to increase the battery life of a wireless device.

In another embodiments, the method may further comprise adjusting by means of a user interface the dependency of the plurality of different activation states of the at least one building automation device on the plurality of different sleep stages of the subject.

If so, in some embodiments, adjusting said dependency may comprise altering the activation state of the at least one building automation device for a given one of the plurality of different sleep stages of the subject. Alternatively or additionally, adjusting said dependency may comprise altering the range of a parameter used for distinguishing the one of the plurality of different sleep stages of the subject from other ones of the plurality of different sleep stages of the subject. The parameter, may, for example, comprise the heart rate and/or body temperature of the subject and/or an amount of movement of the subject.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a graph schematically showing a representative example of a human sleep pattern over the course of one sleep episode;
Fig. 2 is a schematic block diagram of an embodiment of a building automation system; and
Fig. 3 is a schematic block diagram of an embodiment of a method of operating a building automation system such as that shown in Fig. 2.

### Detailed Description

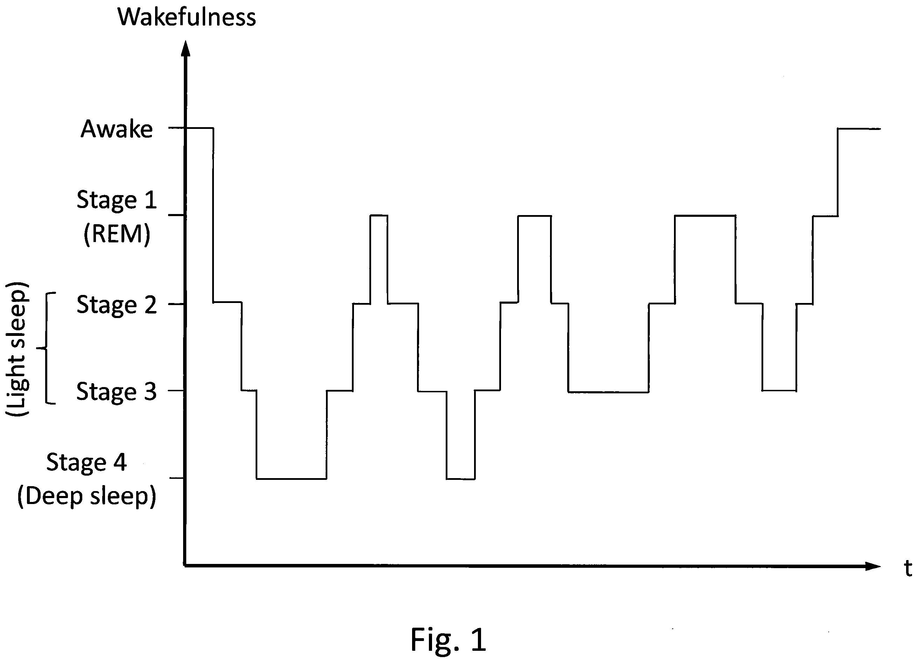

Fig. 1 schematically shows a representative example of a human sleep pattern over the course of one episode of sleep. As may be seen from Fig. 1, after a person falls asleep, they pass through a number of different sleep stages from light sleep to deep sleep, and then back to light sleep again over a single sleep cycle which lasts approximately 90 minutes to 2 hours. This sleep cycle is repeated several times, typically three, four or five times, over the course of one sleep episode. The sleep cycles in one episode of sleep may be of different lengths from each other and comprise different stages of sleep. The different sleep stages are characterized by different physiological behaviour, including changes in body temperature, heart rate, degree of movement and brain activity. In the first sleep cycle, the subject typically passes rapidly through stages of light sleep into a deep sleep stage (stage 4), which is characterized by a lower heart rate and degree of movement, before rising back up to stage 1 sleep, which is characterized by a higher heart rate, rapid eye movement (REM), dreaming and sleep paralysis to prevent the subject from enacting their dreams. Stages 2 and 3 of light sleep are characterized by intermediate heart rates and a greater degree of movement. The length of each sleep stage also varies from cycle to cycle over the course of one sleep episode, with the longest duration of stage 4 deep sleep typically occurring during the first sleep cycle and then reducing in duration thereafter, whereas stage 1 REM sleep increases in duration from cycle to cycle as the episode of sleep progresses.

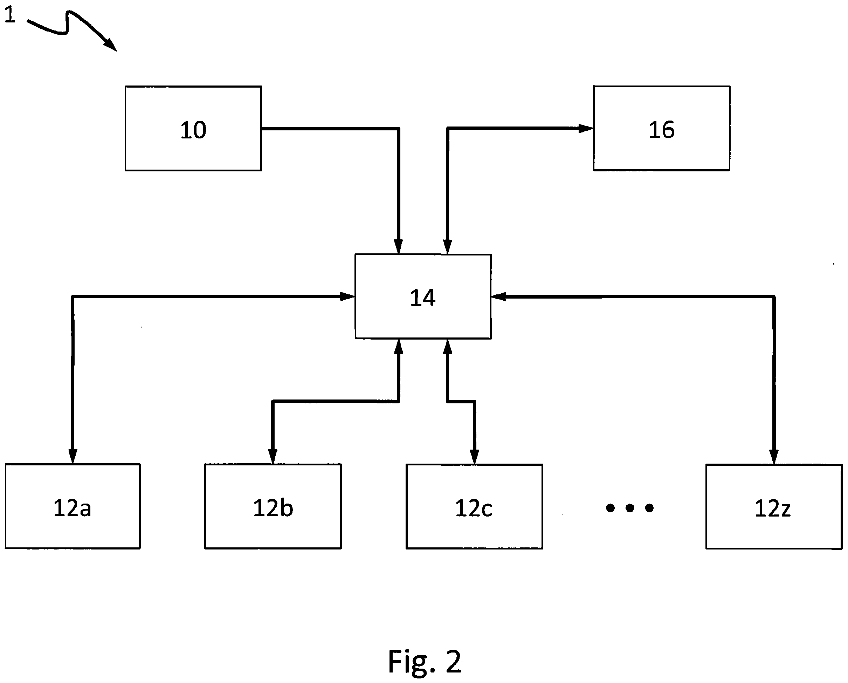

Fig. 2 schematic shows an embodiment of a building automation system 1. The building automation system 1 comprises a sensor 10, which is operable to detect a plurality of different sleep stages of a human or animal subject, a plurality of different building automation device 12a, 12b, 12c, ... 12z, at least one of which has a plurality of different activation states in addition to an off state, a control unit 14 and a user interface 16. The control unit 14 is in wireless two-way communication with the plurality of building automation devices 12a, 12b, 12c, ... 12z. The user interface 16 is also in two-way communication with the control unit 14, which may be either via cable, as in the case, for example, of a wall-mounted control panel, or wirelessly, as in the case of a computer or smart phone. The user interface 16 may be located in the same building as the control unit 14, or it may be located remotely from it and in communication with the control unit 14, for example, via the Internet. In this embodiment, the sensor 10 is a wearable sensor, such as a fitness wristband, and comprises a heart-rate monitor. The sensor 10 is also in wireless communication with the control unit 14 to transmit to the control unit the detected heart rate of the subject. This wireless communication may be via Bluetooth™ or via a cloud server, for example.

During operation of the building automation system 1, the sensor 10 detects a plurality of different sleep stages of a human or animal subject by measuring the heart rate of the subject, which is transmitted to the control unit 14. The control unit 14 distinguishes between the plurality of different sleep stages detected by the sensor 10 by comparing the measured heart rate to one of several different predetermined ranges of heart rates, each of which is respectively associated with a different stage of sleep for that subject. The control unit 14 then places one or more of the building automation devices 12a, 12b, 12c, ... 12z into one of their plurality of different activation states in dependence on which one of the plurality of different sleep stages of the subject has been detected by the sensor 10.

**Table 1**

| **Building Automation Device** | **Awake** | **Light Sleep (Stages 2 and 3)** | **Deep Sleep (Stage 4)** | **REM Sleep (Stage 1)** |
|---|---|---|---|---|
| Motion Sensor | Off | Off | High | Highest |
| Inside Cameras | Off | Medium | High | Highest |
| Outside Cameras | Medium | High | Highest | Highest |
| Main Door Lock | Off | Weak Lock | All Locks | All Locks |
| Room Door Lock | Off | Off | Weak Lock | All Locks |
| Alarms | Off | Weak | Strict | Strict |
| Gas Leakage | Regular | High | Highest | Highest |
| Flooding | Regular | High | Highest | Highest |
| Smoke Detector | Regular | High | Highest | Highest |

Table 1 above gives a representative example of how such different activation states of the various different building automation devices 12a, 12b, 12c, ... 12z may be associated with different sleep stages of a subject. In this embodiment, some of the building automation devices 12a, 12b, 12c, ... 12z are scheduled to communicate with the control unit 14 at a time or times determined by the sleep stage of the subject. For example, as may be seen from Table 1, the motion sensors are switched off and therefore do not communicate with the control unit 14 at all not only when the subject is awake, but also when the subject is in stages 2 or 3 of light sleep. Furthermore, as may also be seen from Table 1, the plurality of different activation states of the building automation device 12a, 12b, 12c, ... 12z comprise a plurality of different security levels. Thus, for example, the gas leakage, flooding and smoke detectors each have a regular, high and highest level of sensitivity, and the door locks both have a "weak lock" and an "all locks" setting, which are also selected by the control unit 14 in dependence on which one of the plurality of different sleep stages of the subject has been detected by the sensor 10.

Unlike in other building automation systems, in the illustrated embodiment, the user interface 16 also allows a user to adjust the dependency of the plurality of different activation states of the building automation devices 12a, 12b, 12c, ... 12z on the plurality of different sleep stages of the subject. In other words, with reference to Table 1 again, the user interface 16 allows the user to alter the contents of each of the cells in Table 1. Moreover, the user interface 16 also allows the user to alter the ranges of the parameter used by the control unit 14 for distinguishing the different sleep stages of the subject from each other. In other words, the user interface 16 allows the user to alter the ranges of the heart rate of the subject which the control unit 14 uses as indicative of the different sleep stages of the subject.

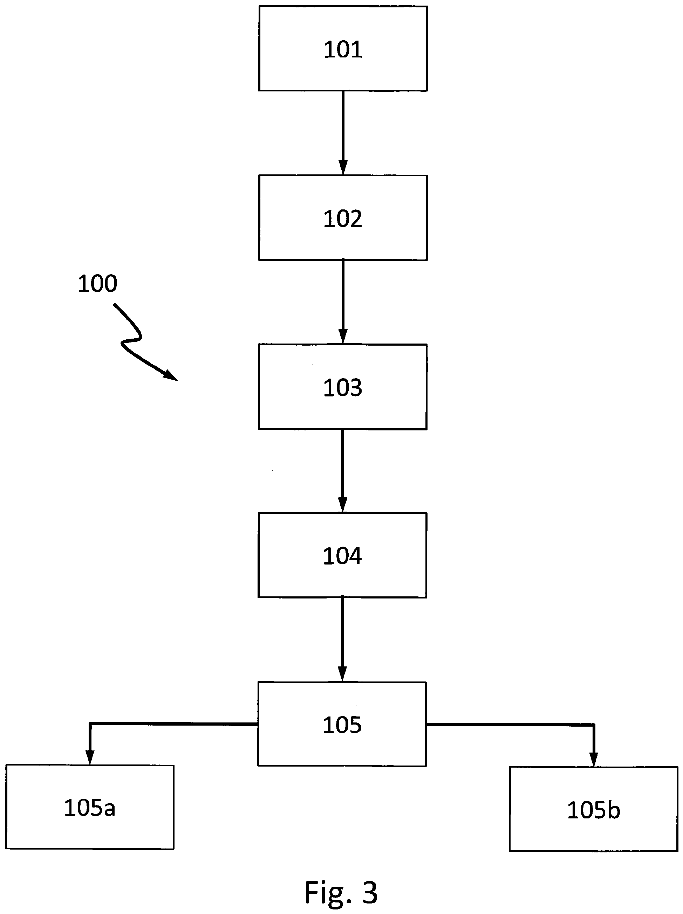

Fig. 3 schematic shows an embodiment of a method 100 of operating a building automation system, such as the building automation system 1 shown in Fig. 2. As shown in Fig. 3, the method 100 comprises detecting 101 by means of a sensor one of a plurality of different sleep stages of a human or animal subject present within the building, distinguishing 102 by means of a control unit the detected one of the plurality of different sleep stages of the subject from other ones of the plurality of different sleep stages of the subject, activating 103 by means of the control unit at least one building automation device within or on the building, wherein the at least one building automation device has a plurality of different activation states in addition to an off state, and placing 104 by means of the control unit the at least one building automation device into one of the plurality of different activation states thereof in dependence on the detected sleep stage of the subject. The method 100 further comprises adjusting 105 by means of a user interface the dependency of the plurality of different activation states of the at least one building automation device on the plurality of different sleep stages of the subject. As represented in Fig. 3, this adjustment 105 may take one or both of two different forms. Box 105a in Fig. 3 represents altering the activation state of the at least one building automation device for a given one of the plurality of different sleep stages of the subject. Box 105b in Fig. 3 represents altering the range of a parameter which is used by the control unit for distinguishing 103 the one of the plurality of different sleep stages of the subject from other ones of the plurality of different sleep stages of the subject.

In summary, therefore, the present invention provides a building automation system at least comprising a sensor operable to detect a plurality of different sleep stages of a human or animal subject, at least one building automation device and a control unit. The sensor may, for example, be a wearable sensor, such as a fitness wristband. The sensor may comprise a heart-rate monitor for measuring the heart rate of the subject as a convenient indicator of the different sleep stages of the subject. The at least one building automation device has a plurality of different activation states in addition to an off state. The control unit is operable to distinguish between the plurality of different sleep stages detected by the sensor and to place the at least one building automation device into one of the plurality of different activation states thereof in dependence on which one of the plurality of different sleep stages of the subject is detected by the sensor. The building automation system may also comprise a user interface with the control unit, whereby a user may adjust the dependency of the different activation states of the at least one building automation device on the different sleep stages of the subject. The present invention also provides a method of operating such a building automation system and a computer program product or a program code or system for executing such a method.

**Reference Numerals:**

| | | | |
|---|---|---|---|
| 1 | Building automation system | 103 | Distinguish one of the plurality of different sleep stages from other sleep stages |
| 10 | Sleep stage sensor | | |
| 12a, 12b, 12c, ... 12z | Building automation devices | 104 | Place the building automation device into one of a plurality of different activation states in dependence on the detected sleep stage |
| 14 | Control unit | | |
| 16 | User interface | 105 | Adjust the dependency |
| 100 | Building automation method | 105a | Alter the activation state for a given sleep stage |
| 101 | Detect one of a plurality of different sleep stages of a subject | 105b | Alter the range of a parameter used for distinguishing the one of the plurality of sleep stages |
| 102 | Activate at least one building automation device | | |

## Claims

1. A building automation system (1) at least comprising:
a sensor (10) operable to detect a plurality of different sleep stages of a human or animal subject;
at least one building automation device (12a, 12b, 12c, ... 12z) having a plurality of different activation states in addition to an off state; and
a control unit (14) operable to distinguish between the plurality of different sleep stages detected by the sensor (10) and to place the at least one building automation device (12a, 12b, 12c, ... 12z) into one of the plurality of different activation states thereof in dependence on which one of the plurality of different sleep stages of the subject is detected by the sensor (10).

2. A building automation system (1) according to claim 1, wherein the sensor (10) comprises a wearable sensor.

3. A building automation system (1) according to claim 1 or claim 2, wherein the sensor (10) comprises a heart-rate monitor.

4. A building automation system (1) according to any one of claims 1 to 3, wherein the at least one building automation device (12a, 12b, 12c, ... 12z) is scheduled to communicate with the control unit (14) at a time or times determined by the sleep stage of the subject.

5. A building automation system (1) according to any one of the preceding claims, wherein the plurality of different activation states of the at least one building automation device (12a, 12b, 12c, ... 12z) comprises a plurality of different security levels.

6. A building automation system (1) according to any one of the preceding claims, further comprising a user interface (16) in communication with the control unit (14), wherein the user interface (16) is operable by a user to adjust the dependency of the plurality of different activation states of the at least one building automation device (12a, 12b, 12c, ... 12z) on the plurality of different sleep stages.

7. A method (100) of operating a building automation system, the method at least comprising:
detecting (101) by means of a sensor (10) one of a plurality of different sleep stages of a human or animal subject present within the building;
distinguishing (102) by means of a control unit (14) the detected one of the plurality of different sleep stages of the subject from other ones of the plurality of different sleep stages of the subject;
activating (103) by means of the control unit (14) at least one building automation device (12a, 12b, 12c, ... 12z) within or on the building, wherein the at least one building automation device has a plurality of different activation states in addition to an off state; and
placing (104) by means of the control unit (14) the at least one building automation device (12a, 12b, 12c, ... 12z) into one of the plurality of different activation states thereof in dependence on the detected sleep stage of the subject.

8. A method (100) according to claim 7, wherein detecting (101) one of a plurality of different sleep stages of the subject comprises detecting a heart rate of the subject.

9. A method (100) according to claim 8, wherein distinguishing (102) the detected one of the plurality of different sleep stages of the subject from other ones of the plurality of different sleep stages of the subject comprises determining whether the heart rate of the subject lies within a predetermined range.

10. A method (100) according to any one of claims 7 to 9, wherein communication between the at least one building automation device (12a, 12b, 12c, ... 12z) and the control unit (14) is scheduled for a time or times determined by the sleep stage of the subject.

11. A method (100) according to any one of claims 7 to 10, wherein placing (104) the at least one building automation device (12a, 12b, 12c, ... 12z) into one of the plurality of different activation states thereof comprises placing (104) the device (12a, 12b, 12c, ... 12z) into one of a plurality of different security levels of the device (12a, 12b, 12c, ... 12z).

12. A method (100) according to any one of claims 7 to 11, further comprising:
adjusting (105) by means of a user interface (16) the dependency of the plurality of different activation states of the at least one building automation device (12a, 12b, 12c, ... 12z) on the plurality of different sleep stages of the subject.

13. A method (100) according to claim 12, wherein adjusting (105) said dependency comprises altering (105a) the activation state of the at least one building automation device (12a, 12b, 12c, ... 12z) for a given one of the plurality of different sleep stages of the subject.

14. A method (100) according to claim 12 or claim 13, wherein adjusting (105) said dependency comprises altering (105b) the range of a parameter used by the control unit (14) for distinguishing (103) the one of the plurality of different sleep stages of the subject from other ones of the plurality of different sleep stages of the subject.

15. A computer program product or a program code or system for executing one or more than one of the methods according to any one of claims 7 to 14.
